(19) Europäisches Patentamt
European Patent Office
Office européen des brevets

(11) **EP 1 417 646 B1**

(12) **FASCICULE DE BREVET EUROPEEN**

(45) Date de publication et mention
de la délivrance du brevet:
**09.11.2011 Bulletin 2011/45**

(51) Int Cl.:
***G06T 11/00*** *(2006.01)*

(21) Numéro de dépôt: **02745534.4**

(22) Date de dépôt: **14.06.2002**

(86) Numéro de dépôt international:
**PCT/FR2002/002044**

(87) Numéro de publication internationale:
**WO 2002/103637 (27.12.2002 Gazette 2002/52)**

(54) **PROCEDE DE RECONSTRUCTION D'UNE IMAGE D'UN OBJET EVOLUANT**

VERFAHREN ZUR BILDREKONSTRUKTION EINES SICH VERÄNDERNDEN OBJEKTES

METHOD FOR RECONSTRUCTION OF AN IMAGE OF AN EVOLVING OBJECT

(84) Etats contractants désignés:
**AT BE CH CY DE DK ES FI FR GB GR IE IT LI LU MC NL PT SE TR**

(30) Priorité: **15.06.2001 FR 0107918**

(43) Date de publication de la demande:
**12.05.2004 Bulletin 2004/20**

(73) Titulaire: **Intellectual Ventures Fund 23 LLC Las Vegas, NV 89128 (US)**

(72) Inventeurs:
• **KOENIG, Anne**
  **F-38410 ST Martin d'Uriage (FR)**
• **GRANGEAT, Pierre**
  **F-38330 ST Ismier (FR)**

(74) Mandataire: **Ablett, Graham Keith et al**
**Ablett & Stebbing**
**Caparo House**
**101-103 Baker Street**
**London, W1U 6FQ (GB)**

(56) Documents cités:
• **SCHAFFTER T ET AL: "Motion compensated projection reconstruction" MAGNETIC RESONANCE IN MEDICINE, MAY 1999, WILEY, USA, vol. 41, no. 5, pages 954-963, XP001065420 ISSN: 0740-3194**
• **HEALY D: "Sub-band decomposition for projection magnetic resonance imaging of dynamic phenomena" ENGINEERING IN MEDICINE AND BIOLOGY SOCIETY, 1994. ENGINEERING ADVANCES: NEW OPPORTUNITIES FOR BIOMEDICAL ENGINEERS., PROCEEDINGS OF THE 16TH ANNUAL INTERNATIONAL CONFERENCE OF THE IEEE BALTIMORE, MD, USA 3-6 NOV. 1994, NEW YORK, NY, USA,IEEE, US, 3 novembre 1994 (1994-11-03), pages 559-560, XP010145274 ISBN: 0-7803-2050-6**
• **NOUMEIR R ET AL: "Comparison between cross-correlation and optical flow methods for patient motion detection in SPECT" ENGINEERING IN MEDICINE AND BIOLOGY SOCIETY, 1995., IEEE 17TH ANNUAL CONFERENCE MONTREAL, QUE., CANADA 20-23 SEPT. 1995, NEW YORK, NY, USA,IEEE, US, 20 septembre 1995 (1995-09-20), pages 529-530, XP010215493 ISBN: 0-7803-2475-7**

**Description**

Le sujet de cette invention est un procédé de reconstruction d'une image d'un objet évoluant.

La reconstruction d'images par tomographie consiste à prendre des jeux de mesures successifs de l'objet par un réseau de détecteurs tournant autour de l'objet. La propriété exprimant l'image est mesurée le long de rayons traversant l'objet et menant respectivement aux détecteurs. Les mesures des détecteurs sont donc des sommes de la propriété le long des rayons de projection. Quand un nombre suffisant de jeux de mesures a été pris à des incidences différentes du réseau de détecteurs, on fait une reconstruction comprenant une étape de filtrage numérique puis une opération dite de rétroprojection pour déduire la valeur de la propriété à chaque point de l'objet d'après les mesures. Le procédé évoque la résolution d'un système d'équations linéaires de grande taille, quoique la reconstruction soit accomplie normalement par des techniques numériques qui sont différentes de celles qu'on emploie pour inverser une matrice : la rétroprojection est plutôt une redistribution des mesures filtrées sur l'objet le long des rayons de projection.

La situation est plus difficile quand l'objet évolue en se déplaçant ou se déformant pendant les mesures, puisque les jeux de mesures, pris à des.états différents de l'objet, ne sont pas immédiatement comparables, un point de croisement de rayons mesurés à des instants différents ne correspondant plus à un point unique de l'objet. On retrouve constamment ce problème si l'objet est un être animé qui respire et dont le coeur bat pendant que les mesures sont prises. Une autre cause de variation des mesures, qui aggrave la précédente, apparaît quand la mesure concerne la scintillation d'un marqueur radioactif que l'objet a ingéré et dont la concentration diminue pendant la mesure, ou encore avec un produit de contraste tel qu'un produit opacifiant injecté dans le réseau vasculaire d'un patient.

Un procédé élémentaire pour pallier cet inconvénient consiste à prendre les mesures simultanément, avec un nombre important de réseaux de détecteurs, mais cela est trop dispendieux en pratique. Un procédé de correction parfois rencontré consiste à ne prendre des mesures qu'à des états identiques dé l'objet, notamment à une même phase du rythme cardiaque, et à ignorer les variations de l'objet, mais la synchronisation des mesures est malaisée et une évolution de caractère périodique est nécessaire.

Divers procédés de reconstruction de l'image tridimensionnelle en corrigeant les variations de l'objet ont été imaginés. Dans le brevet français 2 749 957, les jeux de mesures donnent une séquence d'images primitives dont on extrait une estimation du mouvement. Les images primitives sont ensuite améliorées en leur appliquant une triple correction de régularisation spatiale, de régularisation temporelle et d'adéquation aux mesures. La régularisation spatiale est un lissage de l'image qui estompe ses irrégularités. L'adéquation aux mesures est faite en calculant les projections de l'image corrigée et en les comparant aux projections réellement mesurées. Seule la régularisation temporelle utilise l'estimation du mouvement, en évaluant dans quelle mesure des points identifiés sur des images successives obéissent à cette loi. On peut craindre que l'amélioration ne soit superficielle et ne puisse être obtenue dans toutes les situations. Le volume des mesures est important, et les calculs de correction, de type itératif, sont nombreux.

Dans le brevet français 2 736 454, on calcule de même une série d'images primitives successives de l'objet, puis on essaie de converger par récurrence vers une image finale de l'objet en incorporant successivement les contenus des images successives dans une estimation de l'image finale tout en utilisant un opérateur mathématique exprimant la déformation de l'objet d'une image primitive à une autre, et qu'on estime par une comparaison des images. Les mesures et les calculs sont ici encore nombreux. Un jeu de mesures complet doit être acquis pour chaque état de l'objet pour donner l'image primitive.

On mentionnera le brevet français 2 701 135, où les mesures sont corrigées d'après une loi d'évolution de l'objet qu'on estime, mais la reconstruction fait appel à des méthodes algébriques (et impliquant une inversion du système d'équations) qui imposent de ne commencer les calculs qu'à la fin des mesures. Ces calculs de reconstruction, étant de type itératif, sont nombreux.

L'article de Schaffter et al. "Motion Compensated projection reconstruction", paru dans "Magnetic resonance in medicine", mai 1999, Wiley, USA, vol.41, n°5, p.954 à 963, décrit un procédé de reconstruction d'images en formant d'abord des images simplifiées par des sélections de mesures, puis ces images sont combinées tout en évaluant une loi d'évolution de l'objet.

Les images simplifiées sont cependant des images complètes, c'est-à-dire qu'elles représentent toutes effectivement l'objet et sont donc comparables, provenant chacune de mesures prises dans toutes les directions : les jeux de mesures sont entrelacés, et les images simplifiées sont obtenues après un tour complet du réseau de détecteurs.

Il manque donc un procédé qu'on puisse exploiter en temps réel, c'est-à-dire qui soit apte à donner une image de l'objet presque après avoir pris les mesures, et sans nécessiter un gros volume de mesures ni des temps de calcul importants tout en permettant de traiter des protocoles d'acquisition des mesures où l'objet évolue continûment d'une mesure à l'autre, alors qu'il était supposé immobile pendant la prise de chaque jeu de mesures avec les procédés ordinaires. Il faut souligner que les temps de calcul sont une des causes principales de l'imprécision des images en tomographie, puisqu'ils augmentent très rapidement avec les nombres de points (ou, plus concrètement, de voxels) de discrétisation de l'objet et le nombre d'instants à considérer et qu'on est donc amené à limiter. On a aussi le désir de limiter les mesures à un minimum pour réduire la dose prise par l'objet quand il est soumis à une irradiation.

L'objet de la présente invention est de reconstruire une image rapidement à partir d'une série réduite de jeux de mesures et sans condition sur le rythme d'évolution de l'objet.

Une particularité essentielle de l'invention est qu'on ne se soucie pas d'obtenir une séquence d'images primitives de l'objet pour les corriger au moyen d'une loi d'évolution de l'objet tirée de ces images primitives ou connue autrement. Une seule image est ici obtenue directement au moyen de rétroprojections entreprises par blocs successifs sur des portions des jeux de mesures. Les corrections de l'évolution de l'objet sont faites sur les résultats partiels des rétroprojections plutôt que sur des images successives de l'objet. La loi d'évolution de l'objet peut être déterminée à mesure que les jeux de mesures sont pris.

Les rétroprojections partielles donnent des blocs de résultats respectifs, en utilisant des quantités de mesures insuffisantes pour permettre d'exprimer véritablement l'image recherchée mais qu'on peut corriger d'après la loi d'évolution de l'objet, qu'on détermine parallèlement. Quand cette correction est faite, une combinaison des blocs donne l'image de l'objet. L'objet est traité comme une collection de particules dont on suit les mouvements d'après les traces qu'elles prennent sur les différents blocs de rétroprojection et dont on détermine les valeurs en accumulant celles qu'elles prennent sur ces traces.

Le procédé proposé ici est rapide puisque des blocs de mesures peuvent être rétroprojetés puis exploités dès que la portion de trajectoire pour acquérir ces blocs, et qui ne fait qu'une fraction de tour, a été obtenue. Le volume de résultats manipulés dans chaque bloc est relativement petit. La loi d'évolution de l'objet nécessite certes d'obtenir des premières images obtenues sur au moins un demi-tour de trajectoire, mais le volume et la durée des calculs peuvent être réduits par un sous-échantillonnagé des mesures donnant des premières images très simplifiées mais suffisantes qu'on peut traiter en temps réel, pendant que les acquisitions de mesures sont continuées.

Le procédé de l'invention permet aussi de prendre en compte des variations temporelles de l'objet par des techniques de régression linéaire et d'introduire dès coefficients de confiance pour rendre l'algorithme plus robuste aux différentes erreurs d'estimation du mouvement (apparitions, disparitions, imprécisions ou indéterminations sur la mise en correspondance). Il permet aussi d'introduire des techniques d'aversion pour réduire les artéfacts de radar.

Sous sa forme la plus générale, l'invention concerne un procédé de reconstruction d'une image d'un objet évoluant, comprenant une prise d'une série de jeux de mesures successifs de l'objet, sur des rayons de projection traversant l'objet, par un réseau de détecteurs à des incidences respectives autour de l'objet, une étape de rétroprojection des mesures et une étape de correction d'après une loi d'évolution de l'objet, **caractérisé en ce que** l'étape de rétroprojection est faite en plusieurs fois pour donner des blocs respectifs de résultats de rétroprojection, chacun des blocs groupant des rayons de projection pris seulement pour un secteur angulaire de tour des incidences du réseau de détecteurs ; la loi d'évolution de l'objet est estimée sur des premières images obtenues en accumulant les blocs de rétroprojections sur au moins un demi-tour des incidences du réseau détecteurs ; et les blocs de résultats de rétroprojection sont combinés après avoir été corrigés d'après la loi d'évolution de l'objet pour donner l'image à un instant de référence.

La loi d'évolution peut inclure des variations temporelles d'aspect de l'objet, et lesdites variations sont estimées, dans une réalisation importante de l'invention, par des calculs de régression entre des portions correspondantes dans des premières images résultant d'accumulations des blocs de résultats de rétroprojection ; ou des déplacements de portions de l'objet, et lesdits déplacements sont estimés par des recherche de distances entre des portions similaires desdites premières images.

Ces premières images ne servent pas dans la reconstruction proprement dite de l'image définitive contrairement aux procédés usuels, mais seulement pour l'estimation de la loi d'évolution. Elles seront souvent rendues floues par un sous-échantillonnage des mesures accepté pour accélérer l'estimation. La loi d'évolution pourrait d'ailleurs être introduite par l'utilisateur s'il la connaît, ou à l'aide d'autres capteurs dans d'autres réalisations de l'invention.

La loi d'évolution peut être estimée par étapes et mise à jour alors même que se poursuit l'obtention des mesures et des blocs de rétroprojection.

Les divers aspects de l'invention seront maintenant décrits aux moyens des figures.

- la figure 1 est une vue d'un dispositif de prise de mesures,
- les figures 2 et 3 illustrent deux réseaux de détecteurs,
- les figures 4 et 5 illustrent deux étapes de regroupement des résultats,
- la figure 6 illustre la recherche du champ de déplacement de l'objet,
- et la figure 7 est un organigramme résumant le procédé.

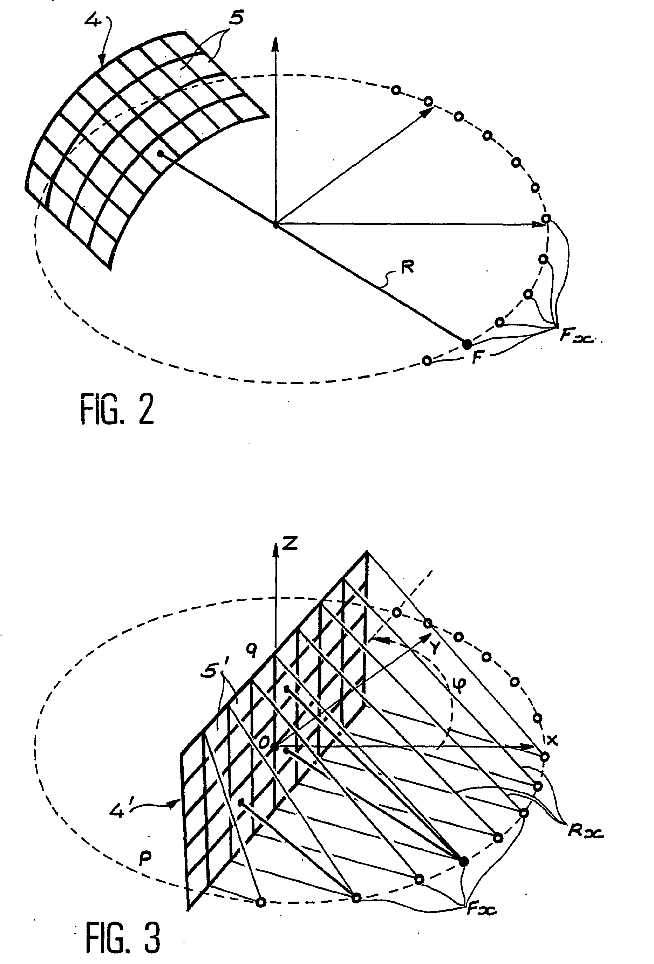

Un scanographe d'un genre classique et sur lequel l'invention peut volontiers trouver emploi comprend une table 1 sur laquelle un patient à examiner repose, et un cadre 2 annulaire contenant un système de détection 3. La table est poussée dans le trou central du cadre 2 jusqu'à ce qu'il entoure la région à examiner du patient, puis le système de détection 3 est tourné autour du patient autant de fois que nécessaire pour prendre les mesures pendant la durée du phénomène à observer. La figure 2 est un schéma de la prise de mesures et montre que le système de détection 3 comprend un réseau 4 bidimensionnel, pouvant être cylindrique, de détecteurs 5 élémentaires afin de reconstruire une image tridimensionnelle ; il s'agit du cas le plus général, mais l'invention s'appliquerait aussi à un réseau linéaire de détecteurs, mobile de la même façon, pour reconstruire une couple bidimensionnelle de l'objet. Chacun des détecteurs 5 est collimaté vers un foyer F qui peut, suivant le cas, être occupé par une source de rayonnement ou être un simple point immatériel. Dans les deux cas, chacun des détecteurs 5 prend une mesure tout au long d'un rayon R qui lui est associé respectivement et mène au foyer F. La plupart des rayons R passent par le patient à examiner. Si le foyer F correspond à une source émissive, les mesures sont d'atténuation du rayonnement le long du rayon R ; sinon, c'est plutôt le rayonnement émis par le patient lui-même, notamment s'il a ingéré un traceur radioactif, qui est mesuré au long des rayons R. Pour une position déterminée du foyer F, l'ensemble des détecteurs 5 du réseau 4 prend un jeu de mesures. On prend successivement une série de jeux de mesures, aux positions généralement référencées par Fx du foyer F, réparties le long d'une circonférence pour disposer d'informations suffisantes pour reconstruire l'objet. Le réseau 4 se déplace conjointement pour que le foyer F prenne successivement les positions Fx.

Les algorithmes de rétroprojection, qui sont utilisés après un filtrage numérique des mesures des détecteurs 5, permettent de déduire la valeur de la propriété f d'atténuation ou d'émission à chaque pont de l'objet à examiner (ici le patient) à partir des sommes de cette valeur sur les rayons R de projections s'entrecroisant à travers l'objet. La reconstruction est accomplie quand la valeur de la propriété f est obtenue pour les différents points de discrétisation (voxels) de l'objet, ce qui donne l'image. Ces algorithmes sont associés à des formes particulières du réseau 4 de détecteurs. La collimation des détecteurs 5 décrite à la figure 2 est conique vers un foyer F ponctuel et demande donc des algorithmes de rétroprojection correspondants. Il est cependant fréquent d'utiliser des algorithmes différents après avoir fait ce qu'on appelle un réarrangement des projections. Comme le montre la figure 3, un choix judicieux de rayons R, pris à diverses positions Fx du foyer F, peut être associé à des détecteurs 5' d'un réseau 4' fictif qui seraient collimatés en éventails parallèles, chaque rangée des détecteurs 5' étant collimatée vers un foyer respectif dans des plans parallèles. Le réarrangement consiste à faire cette association des rayons R au réseau 4' fictif ; il est ensuite possible d'appliquer des algorithmes de rétroprojection spécifiques des réseaux en éventails parallèles comme si les jeux de mesures avaient été pris par le réseau 4' fictif. Des notations usuelles sont introduites dans la figure 3 : trois axes x, y et z fixes servent à mesurer les coordonnées cartésiennes des points de l'objet à examiner, l'axe z étant l'axe de rotation du système de détection 3 et le foyer F tournant dans le plan des axes x et y ; l'angle $\varphi$ donne la position angulaire du réseau 4' par rapport à l'axe x ; les coordonnées p et q donnent les positions des détecteurs 5' dans le réseau 4' perpendiculairement et parallèlement à l'axe z.

Dans le procédé de l'invention, on considère des blocs des jeux de mesures pris successivement, dans un intervalle angulaire donné du foyer F, qui peut être compris entre un angle d'origine $\varphi b$ et $\varphi b + \pi/3$. Le procédé peut être appliqué sur des angles de rotation totaux différents du système de mesure 3, typiquement $\pi$, $2\pi$, $3\pi$ et $4\pi$ (d'un à quatre demi-tours) auxquels il est avantageux d'ajouter un recouvrement (« overscan ») de $\pi/3$ par exemple ; cette technique connue est utile contre les troncatures des mesures introduites par la fenêtre temporelle. Pour chaque tour du réseau 4 ou 4' de détecteurs 5 ou 5', on dispose donc de six blocs de jeux de mesures, et on applique dans chacun d'eux l'algorithme de rétroprojection pour donner autant de blocs de résultats de rétroprojection qui correspondent à des fragments du contenu de l'image de l'objet examiné, qui seront exploités tout en étant trop incomplets pour rendre individuellement l'image à obtenir.

Les rétroprojections par blocs se font par des filtrages numériques classiques, ce qu'on peut exprimer par la formule (1) ci-dessous où P désigne la mesure par un détecteur 5' de coordonnées p et q pour une orientation $\varphi$, w une fonction de pondération et h un filtre de reconstruction d'image tel qu'un filtre en rampe ; fb désigne l'estimation de la fonction donnant l'image, pour ce bloc de rétroprojection, au point de l'objet ayant les coordonnées x, y et z, et C est un coefficient de normalisation qui est égal à 1 si le filtre h est normalisé :

$$f_b(x,y,z) = \frac{1}{C} \int_{\varphi=\varphi_b}^{\varphi=\varphi_b+\pi/3} [(P(\varphi,p,q) \cdot w(p,q)) * h(p)] d\varphi \qquad (1)$$

La fonction de pondération obéit à la formule (2) :

$$w(p,q) = \frac{\sqrt{R_0^2 - p^2}}{\sqrt{R_0^2 - p^2 + q^2}} \qquad (2)$$

où $R_0$ est la distance entre le foyer F et l'origine O des axes x, y et z.

Dans l'exemple présent, les mesures ont été faites sur un peu plus de deux tours complets du réseau 4, donnant treize blocs de largeur angulaire égale à π/3 répartis entre les angles $\varphi = -\dfrac{13\pi}{3}$ et φ=0 de début et de fin des mesures.

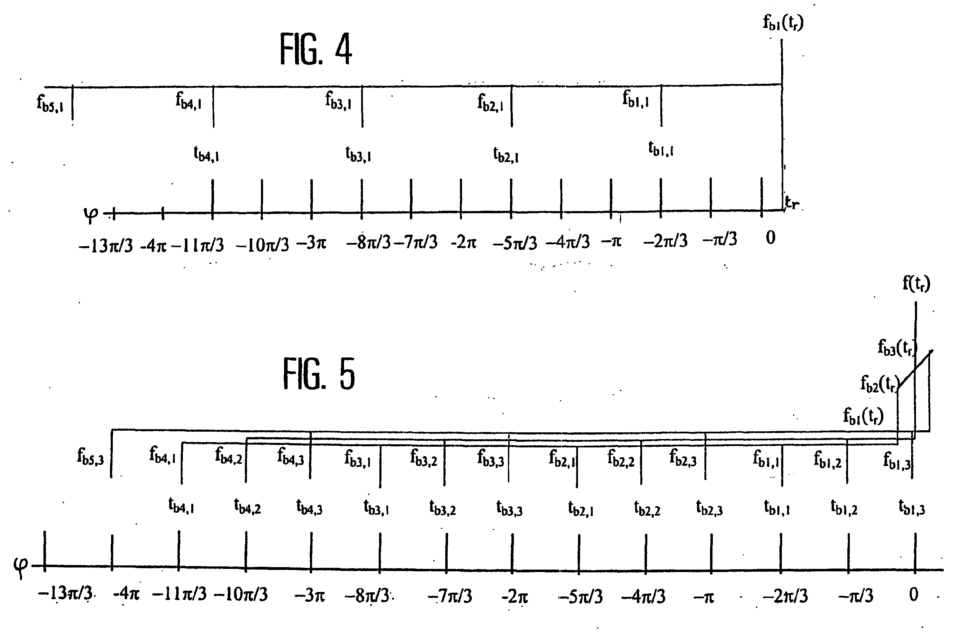

Les blocs de résultats de rétroprojection obtenus par la formule (1) portent la référence générale $f_{bi,j}$ où j désigne un groupe auquel chaque bloc appartient et i son numéro d'ordre dans ce groupe. Les blocs d'un même groupe sont espacés de π (ou 2π dans d'autres réalisations) et correspondent ainsi à des secteurs angulaires identiques ou opposés de prises des mesures. D'après la figure 4, où les secteurs angulaires sont indexés en croissant de l'origine (φ=-13π/3) à la fin des mesures (φ=0), le premier groupe (j=1) comprend les blocs $f_{b4,1}$, $f_{b3,1}$, $f_{b2,1}$ et $f_{b1,1}$ commençant aux angles φ=-4π, -3π, -2π et -π. Les blocs $f_{bi,j}$ sont associés aux temps respectifs $t_{bi,j}$ où leurs secteurs angulaires sont complétés et où les rétroprojections par blocs $f_b$ peuvent être entreprises et qui correspondent aux instants où le foyer F passe par les angles -2π/3, -5π/3, -8π/3 et -11π/3. Le troisième groupe comprend ici le bloc de recouvrement $f_{b5,3}$ entre les angles $\varphi = -\dfrac{13\pi}{3}$ et -4π. Le procédé de reconstruction de l'image consiste, pour ce groupe de blocs de rétroprojection, à effectuer une régression linéaire sur les résultats de rétroprojection $f_{b1,1}$, $f_{b2,1}$, $f_{b3,1}$ et $f_{b4,1}$ pour obtenir une valeur prédite de rétroprojection $f_{bj}(t_r)$ à un instant de référence $t_r$, d'une façon qu'on détaillera dans peu de lignes. La même chose est faite pour les blocs de rétroprojection des groupes j=2 et j=3. Les valeurs prédites $f_{bj}(t_r)$ sont enfin accumulées pour donner l'image f de l'objet à l'instant $t_r$, comme le suggère la figure 5. L'accumulation consiste en une somme et peut être représentée par la formule (3) :

$$f(t_r) = \sum_{j=1}^{3} f_{bj}(t_r) \qquad (3).$$

L'instant de référence $t_r$ peut être quelconque, postérieur à la fin de mesures d'après la figure 4, simultané à la fin de mesures comme le suggère la figure 5, ou antérieur à la fin de mesures. On se sert de toute façon des mêmes résultats $f_{bi,j}$.

Voici comment les valeurs prédites des blocs de rétroprojection à un instant de référence $t_r$ sont obtenues. Une rétroprojection d'un point M de l'objet à un angle φ et un instant $t_\varphi$ de détection peut être notée plus simplement par la formule (4) :

$$f_{B_p}(M,\varphi,t_\varphi) = (Pw * h)(\varphi,t_\varphi,A(M)) \quad avec \quad t_\varphi = \frac{\varphi - \beta_0}{\omega} \qquad (4).$$

où $\beta_0$ et ω sont l'orientation d'origine du réseau 4 ou 4' et sa vitesse angulaire.

On suppose que l'évolution de la valeur de rétroprojection du point M avec le temps obéit à une règle de prédiction simple telle que la suivante (5) :

$$f(M,\varphi,t) = a(M,\varphi,t_r)(t-t_r) + b(M,\varphi,t_r) \qquad (5),$$

les coefficients a et b désignant donc des paramètres de variation linéaire de la fonction f avec le temps.

Les coefficients a et b peuvent être estimés par des régressions linéaires à l'intérieur de chacun des groupes j, d'après l'une ou l'autre des formules suivantes (6) et (7) correspondant à ce qu'on appelle des régressions d'ordres zéro et un:

$$\begin{cases} a_j = 0 \\ b_j = \dfrac{\sum\limits_i c_{ij}{}^2 y_{ij}}{\sum\limits_i c_{ij}{}^2} \end{cases} \quad (6)$$

$$\begin{cases} a_j = \dfrac{2\sum\limits_i c_{ij}{}^2 y_{ij} \sum\limits_k c_{kj}{}^2 (t_{bij} - t_{bkj})}{\sum\limits_i c_{ij}{}^2 c_{kj}{}^2 (t_{bij} - t_{bkj})^2} \\ b_j = \dfrac{2\sum\limits_i c_{ij}{}^2 y_{ij} \sum\limits_k c_{kj}{}^2 (t_{bkj} - t_r)(t_{bkj} - t_{bij})}{\sum\limits_k c_{ij}{}^2 c_{kj}{}^2 (t_{bij} - t_{bkj})^2} \end{cases} \quad (7)$$

où $Y_{ij}$ est égal à $f_{bj}(t_{bi,j})$ et $c_{ij}$ désigne un coefficient de confiance pour les rétroprojections d'un bloc dé résultats. Dans ces formules, les coefficients $c^2{}_{ij}$ pourraient être remplacés par $c^2{}_{ij} w^2{}_{ij}$, où $w_{ij}$ désigneraient des coefficients de confiance temporels qu'on pourrait choisir arbitrairement d'après les instants qu'on voudrait privilégier dans les calculs de reconstruction, ou encore, notamment dans le cas d'un recouvrement, en sous-échantillonnant les blocs extrêmes : les $w^2{}_{ij}$ pourraient ainsi être égaux à ½ pour les premier et dernier blocs, et à 1 pour tous les autres.

Les coefficients de confiance $c_{ij}$ peuvent être attribués arbitrairement, selon l'importance qu'on souhaite de donner à chaque bloc, ou de la façon indiquée plus loin. La formule prédictive (3) s'applique telle quelle si l'objet est immobile. S'il se déplace ou se déforme, le traitement par accumulation dans les groupes sera plus compliqué : les accumulations des résultats $f_{bi,j}$ entre les blocs d'un même groupe j feront correspondre à chaque point M d'un bloc un point M' d'un autre bloc qui a été corrélé au point M par la mesure du champ de déplacement D(x,y,z) de l'objet entre ces deux images.

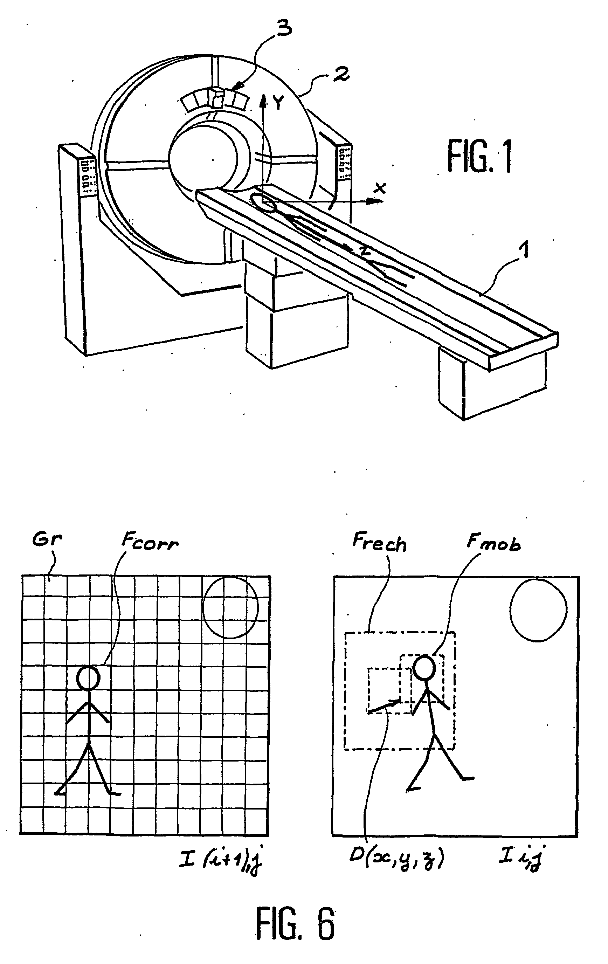

La technique utilisée est évoquée à la figure 6 et comprend une série de corrélations successives de blocs de voxels vu des premières images reconstruites. Un sous-échantillonnage des mesures est adopté dans un mode de réalisation pour accélérer les calculs, et on regroupe des blocs successifs pour donner les premières images de l'objet, floues en raison de l'absence de correction du mouvement. La corrélation est faite entre des premières images $I_{i,j}$ associées à des mêmes groupes j. Une première image antérieure $I_{(i+1),j}$ ainsi obtenue est divisée par une grille Gr qui délimite des fenêtres de corrélation $F_{corr}$. Une fenêtre mobile $F_{mob}$ est déplacée sur une première image postérieure $I_{i,j}$, dans une fenêtre de recherche $F_{rech}$ plus ample. On calcule, à chaque position de la fenêtre mobile $F_{mob}$, un score de corrélation entre elle et la fenêtre de corrélation, qui est d'autant meilleur que leurs contenus se ressemblent. Quatre formules de scores de corrélation sont données ci-dessous :

1)

$$\sum \left| f_{i,j}(x,y,z) - f_{i+1,j}\left[ (x,y,z) - D(x,y,z) \right] \right|$$

2)

$$\sum \left( f_{i,j}(x,y,z) - f_{i+1,j}\left( (x,y,z) - D(x,y,z) \right) \right)^2$$

3)

$$\sum f_{i,j}(x,y,z) \bullet f_{i+1,j}\big((x,y,z)-D(x,y,z)\big)$$

4)

$$\frac{\sum f_{i,j}(x,y,z) \cdot f_{i+1,j}\big((x,y,z)-D(x,y,z)\big)}{\sqrt{\sum f_{i,j}^{2}(x,y,z)} \cdot \sqrt{\sum f_{i+1,j}^{2}\big((x,y,z)-D(x,y,z)\big)}}$$

On voit que la norme de l'erreur sur la différence des images est aussi un score de corrélation.

La différence de position entre la fenêtre de corrélation $F_{corr}$ et la fenêtre mobile $F_{mob}$ ayant donné le meilleur score de corrélation donne l'estimation du champ de déplacement D(x,y,z) pour cette portion de l'objet entre les blocs $f_{(i+i),j}$ et $f_{i,j}$. Les premières images sont calculées au moyen de trois blocs de résultats de rétroprojection au moins (un demi-tour de rotation du système de détection 3). Un arc plus grand qu'un demi-tour pourrait aussi être choisi pour donner une meilleure image. On applique ici la technique du recouvrement pour les calculer avec quatre blocs, tous précédant ici l'instant associé à la première image : la première image la plus antérieure complète ($I_{4,3}$ ici) sera donc calculée avec les blocs compris entre φ=-13π/3 et -3π, la première image suivant ($I_{3,1}$) avec les blocs compris entre φ=-4π et -8π/3, etc., celle qui sera corrélée à $I_{4,3}$ ($I_{3,3}$) avec les blocs compris entre -10π/3 et -2π ; on observe le recouvrement des séries de blocs, $I_{4,3}$ et $I_{3,3}$ corrélés ayant le bloc $f_{b4,3}$ entre φ=-10π/3 et -3π en commun.

Cette recherche est répétée sur tout l'objet et pour toutes les paires de premières images. L'échantillonnage à basse résolution sur les blocs de rétroprojection limite la durée des calculs. Les calculs de corrélation peuvent être limités par certains algorithmes connus comme la descente de gradient, qui consiste à rechercher le maximum de corrélation en déplaçant la fenêtre mobile $F_{mob}$ dans la fenêtre de recherche $F_{rech}$ successivement suivant les trois axes perpendiculaires. La fenêtre de recherche $F_{rech}$ peut être rapetissée et placée autour de la position présumée de la portion recherchée de $f_{i,j}$ si les déplacements D(x,y,z) sont approximativement connus, mais une recherche exhaustive, plus longue, reste possible.

Les scores de corrélation entre les deux images peuvent aider à déterminer les coefficients de confiance $C_{ij}$ mentionnés plus haut. Si les corrélations sont mauvaises, et si notamment certains détails ne peuvent pas être retrouvés d'un bloc à l'autre, les coefficients de confiance de ce bloc ne seront pas bons et leur influence sera réduite à la reconstruction de l'image.

Une fois que les champs de déplacement D(x,y,z) d'un bloc à l'autre ont été calculés, des interpolations peuvent être faites entre les différents groupes jusqu'à l'instant de référence : dans la situation de la figure 5, si tr=$t_{b1,3}$ et si le champ de déplacement entre $t_{b2,3}$ et $t_{b1,3}$ est D(M), on appliquera des champs de déplacement égaux à $\dfrac{D(M)}{3}$ au bloc $f_{b1,2}$ et $\dfrac{2D(M)}{3}$ au bloc $f_{b1,1}$ pour accumuler correctement les blocs $f_{bj}$ en appliquant la formule (3).

Dans un autre mode de réalisation du procédé, aucun sous-échantillonnage des résultats de rétropojection n'est appliqué, et le contenu complet des rétroprojections est employé pour donner les premières images et la loi d'évolution de l'objet. Ce mode est praticable si les processeurs de l'appareil calculent rapidement les rétroprojections partielles.

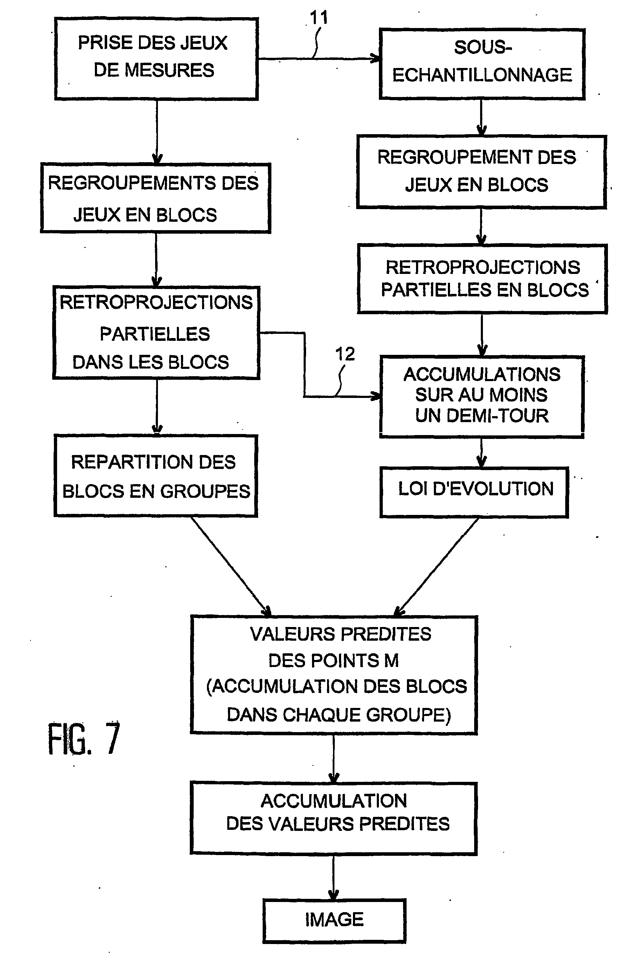

La figure 7 donne l'organigramme résumé du procédé. La flèche 11 exprime le recours à un sous-échantillonnage, la flèche 12 l'emploi des rétroprojections complètes selon l'autre mode de réalisation, mentionné ci-dessus. Dans tous les cas, les accumulations de rétroprojections donnent les premières images de l'objet. Cette figure 7 fait bien ressortir le double chemin entrepris pour reconstruire peu à peu l'image avec les blocs sur les demi-tours successifs du réseau de détecteurs et pour évaluer le mouvement ou les autres transformations de l'objet au moyen de premières images obtenues avec des blocs successifs.

Une correction du phénomène connu de durcissement de spectre peut être appliquée à cette invention afin de distinguer mieux les contributions des tissus et des os à l'atténuation globale de l'objet dans le cas d'un patient.

Le procédé peut aussi être appliqué à la reconstruction d'une série d'images, en le répétant par des intervalles angulaires égaux à celui qu'on a considéré (de -4π à 0) le précédant (de -8π à -4π, etc.) ou le suivant (de 0 à 4π, etc.).

Ces images sont calculées séparément, mais en considérant un ensemble continu de mesures et de blocs de rétroprojections, qui peuvent d'ailleurs, contribuer à des reconstructions d'images consécutives, comme on l'a vu à propos du bloc de recouvrement entre $-\dfrac{13\pi}{3}$ et -4π, qui servirait aussi à la reconstruction de l'image entre -8π et -4π. L'invention repose sur l'emploi d'une "fenêtre glissante" pour isoler les blocs utiles, mais qui peut être déplacée librement d'après l'instant de référence considéré.

Des modifications des secteurs angulaires choisis, de leur nombre, de leur étendue individuelle ou totale et de l'instant de référence dans cette étendue, entre autres, ne seraient que mineures et ne sortiraient pas de la définition de l'invention.

## Revendications

1. Procédé de reconstruction d'une image d'un objet évoluant, comprenant une prise d'une série de jeux de mesures successifs de l'objet, sur des rayons de projection traversant l'objet, par un réseau (4) de détecteurs (5) à des incidences respectives autour de l'objet, une étape de rétroprojection des mesures et une étape de correction d'après une loi d'évolution de l'objet, **caractérisé en ce que** l'étape de rétroprojection est faite en plusieurs fois pour donner des blocs respectifs ($f_b$) de résultats de rétroprojection, chacun des blocs groupant des rayons de projection pris seulement pour un secteur angulaire de tour du réseau de détecteurs en utilisant des quantités de mesures insuffisantes pour permettre d'exprimer véritablement l'image recherchée ; la loi d'évolution de l'objet est estimée sur des premières images obtenues en accumulant les blocs de rétroprojections sur au moins un demi-tour des incidences du réseau de détecteurs ; et les blocs de résultats de rétroprojection sont combinés après avoir été corrigés diaprées la loi d'évolution de l'objet pour donner l'image à un instant de référence ($t_r$).

2. Procédé de reconstruction d'une image tridimensionnelle selon la revendication 1, **caractérisé en ce que** la loi d'évolution inclut des variations temporelles d'aspect de l'objet.

3. Procédé de reconstruction d'une image tridimensionnelle selon la revendication 2, **caractérisé en ce que** lesdites variations sont estimées par des calculs de régression entre des portions correspondantes dans des premières images résultant des blocs de résultats de rétroprojection.

4. Procédé de reconstruction d'une image tridimensionnelle selon l'une quelconque des revendications 1 à 3, **caractérisé en ce que** la loi d'évolution inclut des déplacements D(x,y,z) de portions de l'objet.

5. Procédé de reconstruction d'une image tridimensionnelle selon la revendication 4, **caractérisé en ce que** lesdits déplacements sont estimés par des recherches de distances entre des portions similaires de premières images de l'objet obtenus en accumulant des blocs de rétroprojections successifs.

6. Procédé de reconstruction d'une image tridimensionnelle selon l'une quelconque des revendications 1 à 5, **caractérisé en ce que** la loi d'évolution de l'objet est obtenue au sein de groupes de blocs de résultats de rétroprojection, les blocs de résultats de rétroprojection sont combinés d'abord au sein des groupes pour donner un fragment de contenu de l'image à l'instant de référence, et l'image est obtenue par une addition desdits fragments, les secteurs angulaires des blocs d'un même groupe étant distants soit d'un demi-tour soit d'un tour.

7. Procédé de reconstruction d'une image tridimensionnelle selon l'une quelconque des revendications 1 à 6, **caractérisé en ce que** la loi d'évolution de l'objet est estimée à partir d'un sous-échantillonnage des projections.

8. Procédé de reconstruction d'une image trimimentionnelle selon l'une queconque des revendications 1 à 6, **caractérisé en ce que** la loi d'évolution de l'objet est estimée à partir d'un échantillonnage complet des projections.

9. Procédé de renconstruction d'une image tridimensionnelle selon la revendication 5, **caractérisé en ce que** les premières images font l'objet d'un sous-échantillonnage avant que lesdits déplacements ne soient estimés.

10. Procédé de reconstruction d'une image tridimensionnelle selon la revendication 6, **caractérisé en ce que** la loi d'évolution de l'objet est mise à jour pendant que les jeux de mesures sont pris.

11. Procédé de reconstruction d'une image tridimensionnelle selon l'une quelconque des revendications 1 à 10, **carac-**

**térisé en ce que** des coefficients de confiance ($c_{ij}$) sont calculés pour chacun des blocs ($f_{bi,j}$) une fois que la loi d'évolution de l'objet a été obtenue, et les blocs sont pondérés en fonction desdits coefficients avant d'être combinés.

**Claims**

1. Process for the reconstruction of an image of an evolving object, comprising the taking of a series of a set of successive measurements of the said object on projected radii passing through the object by means of a network (4) of detectors (5) arranged at respective incidences around the object, a stage of overhead projection of the measurements and a correction stage based on the law of evolution of the object, **characterised in that** the overhead projection stage is carried out on several occasions to give the respective blocks ($f_b$) of overhead projection results, with each of the blocks covering the projection radii taken only for an angular sector around the network of detectors, using measuring quantities that are insufficient to allow the image required to be fully expressed; the law of evolution of the object is estimated on the first images obtained by accumulating the overhead projection blocks on at least one half rotation of the incidences of the network of detectors; and the blocks of overhead projection results are combined after having been corrected in accordance with the law of evolution of the object in order to give the image at a reference instant ($t_g$).

2. Process for the reconstruction of a three-dimensional image in accordance with Claim 1 above, **characterised in that** the law of evolution includes temporal variations of the aspect of the object.

3. Process for the reconstruction of a three-dimensional image in accordance with Claim 2 above, **characterised in that** the said variations are estimated by regression calculations between the corresponding portions in the first images resulting from the overhead projection blocks.

4. Process for the reconstruction of a three-dimensional image in accordance with Claims 1 to 3 above, **characterised in that** the law of evolution includes the displacements D (x, y, z) of portions of the object.

5. Process for the reconstruction of a three-dimensional image in accordance with Claim 4 above, **characterised in that** the said displacements are estimated by establishing the distances between similar portions of the first images of the object obtained by accumulating successive overhead projection blocks.

6. Process for the reconstruction of a three-dimensional image in accordance with any of the Claims 1 to 5 above, **characterised in that** the law of evolution of the object is obtained within the blocks of the result of the overhead projection, the blocks of results of the overhead projection are combined firstly within the groups giving a fragment of the contents of the image at the reference instant, and the image is obtained by adding the said fragments, the angular sectors of the blocks from the same group being spaced at either one rotation or one half-rotation apart.

7. Process for the reconstruction of a three-dimensional image in accordance with any of Claims 1 to 6 above, **characterised in that** the law of evolution of the object is estimated on the basis of a sub-sampling of the projections.

8. Process for the reconstruction of a three-dimensional image in accordance with any of Claims 1 to 6 above, **characterised in that** the law of evolution of the object is estimated on the basis of a full sampling of the projections.

9. Process for the reconstruction of a three-dimensional image in accordance with Claim 5 above, **characterised in that** the first images are the object of a sub-sampling before the said displacements are estimated.

10. Process for the reconstruction of a three-dimensional image in accordance with Claim 6 above, **characterised in that** the law of evolution of the object is updated while the sets of measurements are being taken.

11. Process for the reconstruction of a three-dimensional image in accordance with any of the Claims 1 to 10 above, **characterised in that** coefficients of confidence ($c_{ij}$) are calculated for each of the blocks ($f_{bi,j}$) once the law of evolution of the object has been obtained and the blocks are weighted in relation to the said coefficients before being combined.

**Patentansprüche**

1. Verfahren zum Rekonstruieren eines Bildes eines veränderlichen Objekts, umfassend: Durchführen einer Reihe aus aufeinanderfolgenden Vermessungen des Objekts auf Projektionsstrahlen, die das Objekt schneiden, mittels eines Netzes (4) aus Detektoren (5) mit jeweiliger Positionierung um das Objekt herum, eine Stufe einer Rückprojektion der Messungen und eine Korrekturstufe auf Basis einer Gesetzmäßigkeit der Veränderung des Objekts, **dadurch gekennzeichnet, dass** die Rückprojektionsstufe in mehreren Stufen durchgeführt wird, um jeweils Rückprojektions-Ergebnisblöcke ($f_b$) zu liefern, wobei jeder der Blöcke Projektionsstrahlen gruppiert, die nur für einen Winkelsektor einer Drehung des Netzes aus Detektoren genommen werden, unter Verwendung von Messgrößen, die nicht ausreichen, um das benötigte Bild vollständig auszudrücken; wobei die Gesetzmäßigkeit der Veränderung des Objekts aufgrund der ersten Bilder geschätzt wird, die durch Akkumulation der Rückprojektionsblöcke auf mindestens einer ersten halben Drehung der Positionierungen der Netzdetektoren erhalten wird; und wobei die Rückprojektions-Ergebnisblöcke kombiniert werden, nachdem sie gemäß der Gesetzmäßigkeit der Veränderung des Objekts korrigiert wurden, um das Bild in einem Bezugsmoment (tg) zu ergeben.

2. Verfahren zum Rekonstruieren eines dreidimensionalen Bildes gemäß Anspruch 1, **dadurch gekennzeichnet, dass** die Gesetzmäßigkeit der Veränderung vorübergehende Veränderungen des Aussehens des Objekts beinhaltet.

3. Verfahren zum Rekonstruieren eines dreidimensionalen Bildes gemäß Anspruch 2, **dadurch gekennzeichnet, dass** die Veränderungen durch Regressionsberechnungen zwischen entsprechenden Abschnitten in den ersten Bildern, die aus Rückprojektionsblöcken abgeleitet wurden, geschätzt werden.

4. Verfahren zum Rekonstruieren eines dreidimensionalen Bildes gemäß einem der Ansprüche 1 bis 3, **dadurch gekennzeichnet, dass** die Gesetzmäßigkeit der Veränderung Verschiebungen D (x, y, z) von Teilen des Objekts beinhaltet.

5. Verfahren zum Rekonstruieren eines dreidimensionalen Bildes gemäß Anspruch 4, **dadurch gekennzeichnet, dass** die Verschiebungen durch Feststellen von Abständen zwischen ähnlichen Abschnitten der ersten Bilder des Objekts, die durch Akkumulieren von aufeinander folgenden Rückprojektionsblöcken erhalten werden, geschätzt werden.

6. Verfahren zum Rekonstruieren eines dreidimensionalen Bildes gemäß einem der Ansprüche 1 bis 5, **dadurch gekennzeichnet, dass** die Gesetzmäßigkeit der Veränderung des Objekts innerhalb von Gruppen von Rückprojektions-Ergebnisblöcken erhalten wird, wobei die Rückprojektions-Ergebnisblöcke zunächst innerhalb der Gruppen kombiniert werden, was ein Stück des Inhalts des Bildes zu einem Bezugsmoment liefert, und das Bild dadurch erhalten wird, dass die Stücke addiert werden, wobei die Winkelsektoren der Blöcke derselben Gruppe entweder eine ganze Drehung oder eine halbe Drehung auseinander liegen.

7. Verfahren zum Rekonstruieren eines dreidimensionalen Bildes nach einem der Ansprüche 1 bis 6, **dadurch gekennzeichnet, dass** die Gesetzmäßigkeit der Veränderung des Objekts auf Basis eines Sub-Sampling der Projektionen geschätzt wird.

8. Verfahren zum Rekonstruieren eines dreidimensionalen Bildes nach einem der Ansprüche 1 bis 6, **dadurch gekennzeichnet, dass** die Gesetzmäßigkeit der Veränderung des Objekts auf Basis eines vollständigen Sampling der Projektionen geschätzt wird.

9. Verfahren zum Rekonstruieren eines dreidimensionalen Bildes nach Anspruch 5, **dadurch gekennzeichnet, dass** die ersten Bilder einem Sub-Sampling unterzogen werden, bevor die Verschiebungen geschätzt werden.

10. Verfahren zum Rekonstruieren eines dreidimensionalen Bildes nach Anspruch 6, **dadurch gekennzeichnet, dass** die Gesetzmäßigkeit der Veränderung des Objekts aktualisiert wird, während der Satz von Messungen genommen wird.

11. Verfahren zum Rekonstruieren eines dreidimensionalen Bildes nach einem der Ansprüche 1 bis 10, **dadurch gekennzeichnet dass** Vertrauenskoeffizienten ($c_{ij}$) für jeden der Blöcke ($f_{bi,j}$) berechnet werden, sobald die Gesetzmäßigkeit der Veränderung des Objekts ermittelt wurde, und die Blöcke in Relation zu den Koeffizienten gewichtet werden, bevor sie kombiniert werden.

FIG.1

FIG. 6

FIG. 2

FIG. 3

FIG. 4

FIG. 5

```
┌─────────────────────┐        11        ┌─────────────────────┐
│   PRISE DES JEUX    │─────────┐────────▶│       SOUS-         │
│    DE MESURES       │         ⌇         │   ECHANTILLONNAGE   │
└─────────────────────┘                   └─────────────────────┘
          │                                          │
          ▼                                          ▼
┌─────────────────────┐                   ┌─────────────────────┐
│  REGROUPEMENTS DES  │                   │  REGROUPEMENT DES   │
│    JEUX EN BLOCS    │                   │    JEUX EN BLOCS    │
└─────────────────────┘                   └─────────────────────┘
          │                                          │
          ▼                                          ▼
┌─────────────────────┐                   ┌─────────────────────┐
│  RETROPROJECTIONS   │                   │  RETROPROJECTIONS   │
│     PARTIELLES      │──────┐            │ PARTIELLES EN BLOCS │
│   DANS LES BLOCS    │      │   12       └─────────────────────┘
└─────────────────────┘      │   ⌇                   │
          │                  └─────────▶  ┌─────────────────────┐
          │                               │    ACCUMULATIONS    │
          │                               │    SUR AU MOINS     │
          ▼                               │    UN DEMI-TOUR     │
┌─────────────────────┐                   └─────────────────────┘
│  REPARTITION DES    │                              │
│  BLOCS EN GROUPES   │                              ▼
└─────────────────────┘                   ┌─────────────────────┐
          │                               │   LOI D'EVOLUTION   │
          │                               └─────────────────────┘
           ╲                               ╱
            ╲                             ╱
             ▼                           ▼
        ┌──────────────────────────────────────┐
        │         VALEURS PREDITES             │
        │         DES POINTS M                 │
        │  (ACCUMULATION DES BLOCS             │
        │    DANS CHAQUE GROUPE)               │
        └──────────────────────────────────────┘
                        │
                        ▼
        ┌──────────────────────────────────────┐
        │           ACCUMULATION               │
        │        DES VALEURS PREDITES          │
        └──────────────────────────────────────┘
                        │
                        ▼
               ┌──────────────────┐
               │      IMAGE       │
               └──────────────────┘
```

FIG. 7

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2749957
- FR 2736454

- KR 2701135

**Littérature non-brevet citée dans la description**

- Motion Compensated projection reconstruction. **SCHAFFTER et al.** Magnetic resonance in medicine. Wiley, Mai 1999, vol. 41, 954-963